(19) Europäisches Patentamt
European Patent Office
Office européen des brevets

(11) **EP 1 997 851 A1**

(12) **EUROPEAN PATENT APPLICATION**
published in accordance with Art. 158(3) EPC

(43) Date of publication:
**03.12.2008 Bulletin 2008/49**

(21) Application number: **07738508.6**

(22) Date of filing: **14.03.2007**

(51) Int Cl.:
**C08L 23/10** $^{(2006.01)}$   **B65D 1/00** $^{(2006.01)}$

(86) International application number:
**PCT/JP2007/055037**

(87) International publication number:
**WO 2007/108379 (27.09.2007 Gazette 2007/39)**

(84) Designated Contracting States:
**DE FR GB IT**

(30) Priority: **17.03.2006 JP 2006073965**

(71) Applicant: **Mitsui Chemicals, Inc.**
**Tokyo 105-7117 (JP)**

(72) Inventors:
• **INOUE, Norihide**
**Ichihara-shi, Chiba 299-0108 (JP)**

• **KUROKI, Takayuki**
**Ichihara-shi, Chiba 299-0108 (JP)**

(74) Representative: **HOFFMANN EITLE**
**Patent- und Rechtsanwälte**
**Arabellastrasse 4**
**81925 München (DE)**

(54) **POLYPROPYLENE RESIN COMPOSITION, MOLDED BODY, SHEET AND CONTAINER**

(57)    An object of the present invention is to provide a propylene resin composition capable of providing a thermoformed container excellent in heat resistance, moldability, appearance and shape, and a molded article obtained by bending processing a polypropylene resin composition excellent in heat resistance and shape retention property in bending processing.

The present invention provides a polypropylene resin composition comprising 50 to 99 % by weight of a propylene polymer (A) having a meting point (Tm) in the range of 140 to 170˚C as measured by a differential scanning calorimeter and 1 to 50 % by weight of a propylene/α-olefin copolymer (B) having a melting point (Tm) of 100 ˚C or less or having no observed melting point, a molded article and a sheet obtained from the polypropylene resin composition, and a container obtained by thermoforming the sheet.

**EP 1 997 851 A1**

**Description**

FIELD OF THE INVENTION

The present invention relates to a polypropylene resin composition, and in particularly to a resin composition capable of providing a molded article which is good in appearance and shape and further relates to a sheet and a container obtained therefrom.

BACKGROUND OF THE INVENTION

A crystalline polypropylene has excellent mechanical properties such as tensile strength, rigidity, surface hardness, impact resistant strength and cold resistance, optical properties such as gloss and transparency, and food hygienic properties such as nontoxicity and odorless properties, and is widely used especially in the field of food packaging.

Such crystalline polypropylene is molded by bending process to be used as various molded articles, or is molded into a sheet form and further softened by heating and then molded into a container shape. Specifically, the crystalline polypropylene is thermally molded into a cup or a tray shape, which is widely used as, for example, a container for food packaging.

Some containers obtained from such crystalline polypropylene are used for the applications requiring transparency in order to visually confirm the contents. However, when a crystalline polypropylene sheet is bend-processed or thermally molded, there is a problem that blanching of the sheet occurs to produce an opaque container, and thus prevention of the blanching is desired.

In Patent Document 1, there is disclosed a technique in which the blanching of a molded article is prevented in the falling weight impact test of the square plate obtained by injection molding a polypropylene resin composition comprising an ethylene-based random copolymer and a propylene/1-butene random copolymer. However, no description is given on the thermoforming.

Further, in Patent Document 2, there is disclosed a polypropylene resin composition for a sheet comprising a crystalline propylene/ethylene random copolymer and a propylene/butene copolymer rubber. However, there is a problem that sufficient heat resistance is not obtained.

Patent Document 1: Japanese Patent Laid-Open Publication No. H10-212382
Patent Document 2: Japanese Patent Laid-Open Publication No. H10-67896

DISCLOSURE OF THE INVENTION

PROBLEMS TO BE SOLVED BY THE INVENTION

The present invention provides a polypropylene resin composition capable of providing a molded article and a container which are excellent in moldability and good in appearance and shape on bending molding and thermoforming, and a molded article, a sheet and a container obtained by molding the polypropylene resin composition.

MEANS OF SOLBING THE PROBLEMS

As a result of earnest studies to solve the above problems, the present inventors have found that use of a specific polypropylene resin composition provides a molded article, a sheet and a container which are excellent in moldability and good in appearance and shape in bend molding and thermoforming and the problems are thereby solved. The present invention is thus achieved.

Specifically, the present invention is a polypropylene resin composition comprising 50 to 99 % by weight of a propylene polymer (A) having a melting point (Tm) in the range of 140 to 170 ˚C as measured by a differential scanning calorimeter (DSC) and 1 to 50 % by weight of a propylene/$\alpha$-olefin copolymer (B) having a melting point (Tm) of 100 ˚C or less or having no observed melting point.

Further, the present invention is a molded article molded from the polypropylene resin composition, a sheet having a thickness in the range of 0.05 to 5 mm and a container obtained by thermoforming of the sheet.

Furthermore, the present invention is a polypropylene resin composition having a return angle ($\theta$ degree) of 30 degree or less when force is released after bending and holding for 5 minutes a sheet having a thickness of 0.6 mm obtained by molding the polypropylene resin composition at an angle of 90 degree at room temperature.

Still furthermore, the present invention is a molded article obtained by bending processing of the polypropylene resin composition.

EFFECT OF THE INVENTION

The polypropylene resin composition of the present invention provides a molded article excellent in moldability, heat resistance and transparency in producing a molded article.

Use of the polypropylene resin composition of the present invention prevents a molded article, especially a sheet, obtained from the polypropylene resin composition of the present invention from the occurrence of blanching in further thermoforming it, thereby providing a thermally molded container excellent in transparency.

Further, the polypropylene resin composition of the present invention is excellent in shape retention property in bending processing.

BREIF DESCRIPTION OF THE DRAWINGS

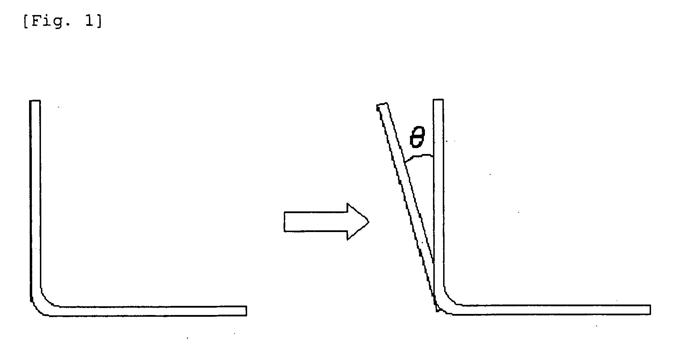

Fig. 1 shows a method for bending processing in order to evaluate the shape retention property which is conducted in Examples and Comparative Examples of the present invention.

DESCRIPTION OF THE CODE

$\theta$: return angle.

BEST MODE FOR CARRYING OUT THE INVENTION

The polypropylene resin composition of the present invention comprises 50 to 99 % by weight of a propylene polymer (A) having a melting point (Tm) in the range of 140 to 170 ˚C as measured by a differential scanning calorimeter and 1 to 50 % by weight of a propylene/$\alpha$-olefin copolymer (B) having a melting point (Tm) of 100 ˚C or less or having no observed melting point.

[Propylene Polymer (A)]

The propylene polymer (A) used as a constituent unit of the polypropylene resin composition of the present invention may contain, in addition to the constituent unit derived from propylene, a constituent unit selected from an $\alpha$-olefin except for propylene (the $\alpha$-olefin except for propylene refers to an $\alpha$-olefin including ethylene except for propylene). Moreover, when the propylene polymer (A) contains a constituent unit derived from an $\alpha$-olefin except for the constituent unit derived from propylene, it may contain one kind or two or more kinds of $\alpha$-olefins. Specifically, the propylene polymer (A) is preferably a propylene homopolymer or is a random copolymer or a block copolymer of propylene and an $\alpha$-olefin selected from an $\alpha$-olefin except for propylene.

Further, the melting point (Tm) of the propylene polymer (A) as measured by a differential scanning calorimeter (DSC), is in the range of 140 to 170 ˚C, preferably 145 to 170 ˚C and more preferably 150 to 165 ˚C. Furthermore, the content of the constituent unit derived from propylene in the propylene polymer (A) is 80 to 100 mol%, preferably 85 to 100 mol%, more preferably 90 to 100 mol%, further more preferably 96.5 to 100 mol%, especially preferably 100 mol%, that is, a homopolymer of propylene.

When the propylene polymer (A) is a copolymer, as the $\alpha$-olefin except for propylene used as a constituent unit compound, there may be mentioned an $\alpha$-olefin including ethylene and those having 4 to 20 carbon atoms, and preferably ethylene, 1-butene and 1-pentene. The constituent unit content derived from an $\alpha$-olefin used for the copolymerization in the propylene polymer (A) is 0 to 20 mol%, preferably 0 to 15 mol%, more preferably 0 to 10 mol%, and further more preferably 0 to 3.5 mol%.

The melt flow rate (hereinafter, abbreviated as MFR) of the propylene polymer (A), as measured at 230 ˚C under a load of 2.16 kg in accordance with ASTM D1238, is 0.05 to 50 g/10 min., preferably 0.1 to 20 g/10 min.

Such propylene polymer (A) may be produced by polymerizing propylene or copolymerizing propylene with other $\alpha$-olefin(s) by using a Ziegler catalyst system comprising a solid catalyst component containing magnesium, titanium, halogen and an electron donor as an essential component, an organic aluminum compound and an electron donor, or a metallocene catalyst system using a metallocene compound as a catalyst component, but may also be produced by other known methods.

[Propylene/$\alpha$-Olefin Copolymer (B)]

The propylene/$\alpha$-olefin copolymer (B) used in the present invention is a propylene/$\alpha$-olefin random copolymer containing a constituent unit derived from propylene and a constituent unit derived from an $\alpha$-olefin except for propylene (the $\alpha$-olefin except fbr propylene refers to an $\alpha$-olefin including ethylene except for propylene). Moreover, the constituent unit contained in the propylene/α-olefin copolymer (B) and derived from an α-olefin contains one kind or two or more kinds of α-olefins.

Further, the melting point (Tm) of the propylene/α-olefin random copolymer (B), as measured by DSC method (an endothermic peak observed when after holding at 200 °C for 5 minutes, the temperature is lowered to -20 °C at a temperature lowering rate of -20 °C/min. and subsequently the temperature is again raised to 180 °C at a temperature rising rate of 20 °C/min.), is 100 °C or less, preferably 40 to 95 °C, more preferably 50 to 90 °C, or is not observed when measured by the method.

The propylene/α-olefin random copolymer (B) can be obtained by copolymerizing propylene with at least one kind of α-olefin selected from α-olefins except for propylene by using a known stereoregular catalyst. Especially preferable is a propylene/α-olefin random copolymer copolymerized by using a metallocene catalyst because the molded article produced thereof is less sticky. In this case, the molecular weight distribution (Mw/Mn), as measured by gel permeation chromatography (GPC), is in the range of 1 to 3.

The α-olefins copolymerized together with propylene, except for propylene include ethylene and α-olefin having 4 to 20 carbon atoms such as 1-butene or 1-pentene. Further, the constituent unit derived from an α-olefin contains one kind or two or more kinds of α-olefins. Specifically, preferably used is 1-butene or are 1-butene and further α-olefin(s) except for 1-butene, but especially preferable is 1-butene.

The content of the constituent unit derived from propylene in the propylene/α-olefin random copolymer (B) is 50 to 95 mol%, preferably 65 to 90 mol%, more preferably 65 to 79 mol% and especially preferably 70 to 79 mol%. Further, the content of the constituent unit derived from α-olefin including ethylene and α-olefin having 4 to 20 carbon atoms is, for example, 5 to 50 mol%, preferably 10 to 35 mol%, more preferably 21 to 35 mol% and especially preferably 21 to 30 mol% (here the sum of the constituent unit derived from propylene and the constituent unit derived from an α-olefin including ethylene and α-olefin having 4 to 20 carbon atoms is 100 %).

The propylene/α-olefin random copolymer (B) can be obtained by using a catalyst as described, for example, in the pamphlet of International Publication No. 2004/087775. Preferably used is a propylene/α-olefin random copolymer (B) in which the melting point(Tm)(°C) and the content M (mol%) of the constituent unit derived from an α-olefin including ethylene and α-olefin having 4 to 20 carbon atoms as determined by $^{13}$C-NMR spectrum satisfy the following relationship (1):

$$146exp(-0.022\ M)\ \geq\ Tm\ \geq\ 125exp(-0.032\ M)\quad(1)$$

The melt flow rate (MFR) of the propylene/α-olefin random copolymer (B), as measured at 230 °C under a load of 2.16 kg in accordance with ASTM D1238, is 0.1 to 50 g/10 min. , and preferably 1 to 20 g/10 min.

[Polypropylene Resin Composition]

The polypropylene resin composition of the present invention comprises 50 to 99 % by weight of the propylene polymer (A) and 1 to 50 % by weight of the propylene/α-olefin copolymer (B). The polypropylene resin composition preferably comprises 60 to 99 % by weight of the propylene polymer (A) and 1 to 40 % by weight of the propylene/α-olefin copolymer (B), more preferably comprises 70 to 98 % by weight of the propylene polymer (A) and 2 to 30 % by weight of the propylene/α-olefin copolymer (B), and especially preferably comprises 75 to 95 % by weight of the propylene polymer (A) and 5 to 25 % by weight of the propylene/α-olefin copolymer (B). If each component is blended at the above ratio, the polypropylene resin composition of the present invention is excellent in moldability, heat resistance and transparency and can be suitably used especially for thermoforming.

In the present invention, there may be optionally contained other synthetic resins and rubbers or additives such as antioxidants, heat stabilizers, weather stabilizers, slip agents, antiblocking agents, nucleating agents, pigments and hydrochloric absorbers and inorganic fillers so long as the performance as the polypropylene resin composition of the present invention is not impaired.

As the other synthetic resins, there may be contained, in addition to the propylene polymer (A) and the propylene/α-olefin copolymer (B), an ethylene homopolymer and an α-olefin copolymer of ethylene and α-olefin having 3 to 20 carbon atoms, wherein the α-olefin content is less than 50 mol%, but the embodiment containing no such polymers is preferable. Further, as the olefin polymer component contained in the composition, the composition preferably comprises only the propylene polymer (A) and the propylene/α-olefin copolymer (B) of the present invention (even in this case, there may be contained the above mentioned additives such as antioxidants, heat stabilizers, weather stabilizers, slip agents, antiblocking agents, nucleating agents, pigments and hydrochloric acid absorbers as well as inorganic fillers).

The polypropylene resin composition of the present invention may be used in a pellet form after blending each component and, when necessary, various additives by a mixer, for example, a Henschel mixer, a Banbury mixer and a tumbler mixer and then melting and kneading the mixture using a single screw or a twin-screw extruder. However, the polypropylene resin composition may be fed to a known molding machine such as a sheet molding machine and an injection molding machine in a blended form without melting and kneading the components.

Further, in the present invention, except for a method of blending each component, the polypropylene resin composition may be obtained by producing each component at the stage of polymerization, that is, a method of multi-stage polymerization.

Moreover, a sheet with a thickness of 0.6 mm is obtained by film-forming the polypropylene resin composition at a cylinder temperature of 210 ˚C and at a chill roll temperature of 30 ˚C using an extruder equipped with a T-die, and a haze of the sheet, as measured in accordance with ASTM D1003, is 60 % or less, preferably 1 to 55 %. The value of the haze is preferably within the range, from the viewpoint of high transparency.

Furthermore, the resin composition of the present invention has a deflection temperature under load of 80 to 150 ˚C, preferably 80 to 120 ˚C and more preferably 90 to 110 ˚C. The deflection temperature under load is measured under a load of 0.45 MPa in accordance with JIS K7191 using a test specimen with a length of 127 mm, a width of 12.5 mm and a thickness of 3.2 mm obtained by injection molding the polypropylene resin composition. If the deflection temperature under load is within the range, the resin composition is excellent in heat resistance.

In addition, the resin composition of the present invention has a return angle (θ degree) of 30 degree or less, preferably 0.1 to 30 degree, more preferably 0.1 to 20 degree, further more preferably 3 to 18 degree and especially preferably 3 to 13 degree. The return angle is measured in the following manner, that is, a sheet obtained by forming the polypropylene resin composition and having a thickness of 0.6 mm is bent and held at an angle of 90 degree at room temperature for 5 minutes, and then the force is released. When the return angle is within the range, the resin composition is excellent in shape retention property at bending processing.

[Film or Sheet]

A film or sheet of the present invention may be obtained by molding the polypropylene resin composition of the present invention into a film or sheet using extruder equipped with a T-die or a calendering-equipment used for molding a film or sheet of a usual polyolefin. Further, a film or sheet of the present invention has a thickness in the range of 0.05 to 5 mm, usually in the range of 0.1 to 3 mm.

A film or a sheet of the present invention may be stretched in a monoaxial or biaxial direction.

A film or sheet of the present invention may be a laminated film or laminated sheet which is laminated with a film or sheet comprising other resins or with a metallic foil, and the laminated film or laminated sheet comprises at least one layer of a polypropylene resin composition of the present invention.

Further, except for layers composed of a film or sheet comprising a polypropylene resin composition used in the case where a laminated film or sheet is constituted, other layers include a film obtained from polypropylene, polyethylene, polyimide and polyester, a stretched film thereof and a metallized film in which aluminum or a silicon compound is deposited on these films. When such complex laminated structure is constituted, there may be preferably used a known coextrusion method, such as a dry lamination method or an extrusion lamination method.

In addition, a film or a sheet of the present invention may be used as a metallized sheet that aluminum or a silicon compound is directly deposited on the film or sheet of the present invention or a stretched film or a stretched sheet thereof.

Since a film or sheet of the present invention is excellent in heat resistance, transparency, appearance and shape, it is suitably used, for example, for food packaging application or clothes packaging application and as packing and packaging materials.

[Container]

Since the container of the present invention is excellent in heat resistance, transparency, appearance and shape, it is suitably used as a container for food packaging of, for example, bean curd, jelly, dairy products such as yogurt or frozen foods, and a container used for the storage or transportation of such as electric parts or electronic components.

A container of the present invention may be obtained by thermoforming a film or sheet comprising the polypropylene resin composition of the present invention into a container shape.

The thermoforming refers to a process in which a film or a sheet comprising a thermoplastic resin is heat-softened and the shape is arranged while it is soft, and then it is cooled to produce a molded article ("Jitsuyo Plastic Yogo Jiten", revised third edition, published by Plastics Age Co., Ltd.). As the thermoforming method, there may be adopted a known method in which a film or sheet comprising a thermoplastic resin is heat-softened, followed by molding into a die shape. As the molding method, there may be mentioned, for example, a method in which the film or sheet is molded into a die shape using vacuum or compressed air and further using a plug in combination as needed (such as a straight method, a drape method, an air-slip method, a snapback method or a plug-assist method), and a method of press-molding the film or sheet.

Typically, a sheet is heated to a temperature range from the glass transition temperature to the melting point, preferably from (melting point - 50 ˚C) to the melting point, to be softened. Subsequently, the sheet is pressed to a die using vacuum or compressed air or both of them and then cooled to obtain a thermoformed container.

Further, shapes of such a container include shapes such various cups, trays, dishes and bowls.

[Molded Article]

Furthermore, a film or a sheet obtained from the polypropylene resin composition of the present invention may be bend-processed into a desired shape at room temperature or under a heating condition. For example, the film or sheet may be molded into a molded article of such as a tray shape or a box shape. As the molded article, there may be specifically exemplified a box housing a cosmetic, a cake, a toy, a writing material, or sundry goods.

EXAMPLES

Next, the present invention will be explained in detail with reference to Examples. However, the present invention is not limited by these Examples.

[Measurements of Physical Properties of Propylene Polymer (A) and Propylene/1-Buten Random Copolymer (B)]

(1) Propylene Content and 1-Butene Content

The propylene content and 1-butene content were measured by $^{13}$C-NMR spectrum.

(2) Molecular Weight Distribution (Mw/Mn)

The molecular weight distribution (Mw/Mn) was determined by using GPC-150C manufactured by Millipore Corporation as follows.

A separation column (TSK GNH HT) having a diameter of 27 mm and a length of 600 mm was used at a column temperature of 140 ˚C. The mobile phase was constituted of o-dichlorobenzene (Wako Pure Chemical Industries, Ltd.) and 0.025% by weight of 3,5-di-tert-butyl-4-hydroxytoluene (BHT; manufactured by Takeda Pharmaceutical Co. Ltd.) as an antioxidant. The mobile phase was delivered at a flow rate of 1. 0 ml/min. ; the sample concentration was set at 0.1 % by weight; the injected amount of the sample was 500 $\mu$l; and a differential refractometer was used as a detector.

(3) Melting Point (Tm)

The melting point was measured by a DSC-7 type apparatus (a differential scanning type calorimeter (DSC)) manufactured by Perkin-Elmer Corporation. The melting point was determined from an endothermic curve obtained by heating approximately 5 mg of a sample filled in an aluminum pan to 200 ˚C and maintaining it at 200 ˚C for 5 minutes, then cooling it to -20 ˚C at a cooling rate of -20 ˚C/min. and maintaining it at -20˚C for 2 minutes and subsequently heating it again at a rate of 20˚C /min.

(4) Melt Flow rate (MFR)

The melt flow rate was measured at 230 ˚C under a load of 2.16 kg in accordance with ASTM D1238.

[Physical Properties Measurements]

(1) Deflection Temperature Under Load

The deflection temperature under load was measured under a load of 0.45 MPa in accordance with JIS K7191 using a test specimen with a length of 127 mm, a width of 12.5 mm and a thickness of 3.2 mm obtained by injection molding a resin composition.

(2) Total Haze of Sheet

The total haze of a sample of sheet with a thickness of 0.6 mm, which was obtained by film-forming a resin composition at an extrusion temperature of 210 ˚C and at a chill roll temperature of 30˚C using a 50 mm diameter single screw extruder equipped with a T-die, was measured in accordance with ASTM D1003.

### (3) Moldability of Sheet

When a sample of sheet having a thickness of 0. 6 mm was formed by film-forming a resin composition at a cylinder temperature of 210 ˚C and at a chill roll temperature of 30 ˚C using a 50 mm diameter single screw extruder equipped with a T-die, the degree of stickiness of the sample to the chill roll was visually observed and the sample with good result was marked "O", and the sample with stickiness was marked "×".

### (4) Vacuum Moldability

When a sample of sheet obtained in the same manner as used in the item, evaluation of the moldability of sheet, mentioned above was vacuum molded by using a vacuum molder equipped with a cup-shaped die having a bore diameter of 80 mm and a depth of 40 mm manufactured by Asano Laboratories Co., Ltd., the softening state of the sample in preheating at a preheater temperature of 250 ˚C for 15 sec. was visually observed.
Further, the blanching state was also observed for a molded article obtained by vacuum molding under the conditions of a preheater temperature of 250 ˚C, a preheating time of 15 sec., a die temperature of 20 ˚C and a residence time in the die of 10 sec. The sample without blanching was marked "◎", the sample with slight blanching was marked "○" and the sample with blanching was marked "×".

### (5) Total Haze of Molded Article

The bottom portion of a cup-shaped molded article was obtained by vacuum molding a resin composition by using a vacuum molder equipped with a cup-shaped die having a bore diameter of 80 mm and a depth of 40 mm manufactured by Asano Laboratories Co. , Ltd., and cutting out the bottom portion of the molded article. The total haze of the bottom portion of the molded article was measured in accordance with ASTM D1003. The thickness of the bottom portion of the cup-shaped molded article cut out was 0.4 mm.

### (6) Bending Workability (Shape Retention Property)

A sample of sheet with a thickness of 0.6 mm, which was obtained by film-forming a resin composition at an extrusion temperature of 210 ˚C and at a chill roll temperature of 30 ˚C using a 50 mm diameter single screw extruder equipped with a T-die, was cut out in a rectangular shape having a length of 200 mm and a width of 20 mm.
Subsequently, a return angle ($\theta$ degree) was measured by releasing the force after bending and holding the sample at an angle of 90 degree, as shown in Fig. 1, at room temperature for 5 minutes. The results show that, the smaller return angle $\theta$ the sample has, the better shape property is.

[Propylene Polymer (A)]

### (A1) Propylene Homopolymer

Melting Point (Tm); 160 ˚C, MFR (at a temperature of 230 ˚C, under a load of 2.16 kg); 0.5 g/10 min.

### (A2) Propylene/Ethylene Random Copolymer

Ethylene Content; 4.7 mol%, Melting Point (Tm); 142 ˚C, MFR (at a temperature of 230 ˚C, under a load of 2.16 kg); 9 g/10 min.

[Propylene/$\alpha$-Olefin Copolymer(B)]

### (B1) Propylene/1-Butene Random Copolymer

A 20-L polymerization apparatus thoroughly purged with nitrogen was charged with 8.7 L of dried hexane, 900 g of 1-butene and triisobutylaluminum (1.0 mmol) at room temperature. After the inside temperature of the polymerization apparatus was elevated to 65˚C, propylene was fed until the pressure inside the apparatus became 0.7 MPa.
Subsequently, the polymerization apparatus was charged with a toluene solution in which 0.002 mmol of dimethylmethylene(3-tert-butyl-5-methylcyclopentadienyl)fluor enylzirconium dichloride and methylaluminoxane (manufactured by Tosoh Finechem Corp.) having 0. 6 mmol equivalent of aluminum were brought into contact, and then the polymerization was performed for 30 minutes while keeping the inside temperature at 65 ˚C and the propylene pressure at 0.7 MPa, followed by addition of 20 ml of methanol to stop the polymerization.

After depressurizing, a polymer was precipitated from the polymerization solution in 20 L of methanol and dried under vacuum at 130 ˚C for 12 hours.

The resulting polymer had a weight of 130 g, a propylene content of 74 mol%, a butene content of 26 mol%, a melting point (Tm) of 75 ˚C, an MFR (at a temperature of 230 ˚C, under a load of 2.16 kg) of 7 g/10 min. and a molecular weight distribution (Mw/Mn) of 2.1. A required amount of the polymer was obtained by repeating the above operations.

(B2) Propylene/1-Butene Random Copolymer

(B2) was produced by the same method as the above method except that the added amounts of propylene and 1-butene were changed. The resulting polymer had a propylene content of 78 mol%, a butene content of 22 mol%, a melting point (Tm) of 83˚C, an MFR (at a temperature of 230 ˚C, under a load of 2.16 kg)of 7 g/10 min. and a molecular weight distribution (Mw/Mn) of 2.0.

(B3) Propylene/1-Butene Random Copolymer

(B3) was produced by the same method as the above method except that the added amounts of propylene and 1-butene were changed. The resulting polymer had a propylene content of 85 mol%, a butene content of 15 mol%, a melting point (Tm) of 96˚C, an MFR (at a temperature of 230 ˚C, under a load of 2.16 kg) of 7 g/10 min. and a molecular weight distribution (Mw/Mn) of 2.1.

(C1) Ethylene/1-Butene Random Copolymer

An ethylene/1-butene copolymer (Trade Name; TAFMER A -4085, manufactured by Mitsui Chemicals, Inc.) had a melting point (Tm) of 67 ˚C and an MFR (at a temperature of 190 ˚C, under a load of 2.16 kg) of 3.6 g/10 min.

[Example 1]

<Sheet Comprising Polypropylene Resin Composition>

A polypropylene (A) and a propylene/1-butene random copolymer (B) were dry-blended at blending quantities described in Table 1 using a Henschel mixer, and the resulting polypropylene resin composition was film-formed at an extrusion temperature of 210 ˚C and at a chill roll temperature of 30 ˚C using an extruder equipped with a T-die to obtain a sample of sheet having a thickness of 0.6 mm.

<Vacuum molding>

The sample of sheet obtained above was vacuum molded under the conditions of a preheater temperature of 250 ˚C, a preheating time of 15 sec., a die temperature of 20 ˚C and a residence time in the die of 10 sec. using a vacuum molder equipped with a cup-shaped die having a bore diameter of 80 mm and a depth of 40 mm.

Table 1 shows the evaluation results of the deflection temperature under load of a test specimen as an indicator of the heat resistance, sheet moldability, haze of the sheet, vacuum moldability (softening state and blanching state) and haze of the molded articles obtained by vacuum molding.

<Bending Workability>

By using the sheet sample obtained above, as shown in Fig. 1, the shape retention property at bending processing was evaluated by measuring a return angle θ (degree) when the force is released after bending and holding the sheet at an angle of 90 degree at room temperature for 5 minutes.

[Examples 2 and 3 and Comparative Example 1]

A sample of sheet was obtained in the same manner as in Example 1 except that the blending ratio of the propylene polymer (A) and the propylene/1-butene random copolymer (B) was set to the composition described in Table 1. Then, the resulting sheet sample was vacuum molded and bend-processed.

Table 1 shows the results of evaluation of physical properties, which evaluation was performed in the same manner as in Example 1.

[Example 4]

A sample of sheet was obtained in the same manner as in Example 1 except that (A2) was used as a propylene polymer (A).
Then, the obtained sample of sheet was vacuum molded and bend-processed.
Table 1 shows the results of evaluation of physical properties, which evaluation was performed in the same manner as in Example 1.

[Example 5]

A sample of sheet was obtained in the same manner as in Example 2 except that (B2) was used as a propylene/α-olefin copolymer (B).
Then, the obtained sample of sheet was vacuum molded and bend-processed.
Table 1 shows the evaluation results of physical properties, which evaluation was performed in the same manner as in Example 1.

[Example 6]

A sample of sheet was obtained in the same manner as in Example 2 except that (B3) was used as a propylene/α-olefin copolymer (B).
Then, the obtained sheet was vacuum molded and bend-processed.
Table 1 shows the results of evaluation of physical properties, which evaluation was performed in the same manner as in Example 1.

[Comparative Example 2]

A sample of sheet was obtained in the same manner as in Example 1 except that (C1) ethylene/1-butene copolymer was used in place of the propylene/α-olefin copolymer (B) and the blending ratio was set to the composition described in Table 1.
Then, the obtained sheet was vacuum molded and bend-processed.
Table 1 shows the results of evaluation of physical properties, which evaluation was performed in the same manner as in Example 1.
[Table 1]

| | | Example 1 | Example 2 | Example 3 | Example 4 | Example 5 | Example 6 | Comparative Example 1 | Comparative Example 2 |
|---|---|---|---|---|---|---|---|---|---|
| Propylene polymer (A) | Resin type | A1 | A1 | A1 | A2 | A1 | A1 | A1 | A1 |
| | % by weight | 99 | 95 | 80 | 99 | 95 | 95 | 100 | 95 |
| Propylene/α-olefin copolymer (B) | Resin type | B1 | B1 | B1 | B1 | B2 | B3 | - | C1 |
| | % by weight | 1 | 5 | 20 | 1 | 5 | 5 | 0 | 5 |
| Deflection temperature under load (0.45 MPa) | ˚C | 110 | 95 | 90 | 85 | 100 | 103 | 115 | 85 |
| Moldability of sheet | - | ○ | ○ | ○ | ○ | ○ | ○ | ○ | ○ |
| Haze of sheet | % | 47 | 49 | 45 | 3.2 | 50 | 51 | 62 | 55 |
| Vacuum moldability | Softening State | - | Good | Good | Good | Good | Good | Good | Good | Good |
| | Blanching Stare | - | ○ | ○ | ○ | ○ | ○ | △ | × | × |
| Haze of molded articles | % | 30.2 | 10.3 | 4.5 | 2.5 | 11.6 | 14.8 | 50 | 41.6 |
| Shape retention property | Degree | 16 | 12 | 5 | 14 | 15 | 20 | 40 | 18 |

As shown in Examples 1 to 6 in Table 1, the molded article obtained by molding the polypropylene resin composition comprising the propylene polymer (A) and the propylene/α-olefin copolymer (B) has substantially no blanching in thermoforming and is excellent in moldability, heat resistance, transparency, as well as has an excellent shape retention property in bending processing.

INDUSTRIAL APPLIABILITY

Since a container obtained by thermoforming sheet obtained from the polypropylene resin composition of the present invention is excellent in heat resistance, transparency, appearance and shape, it is suitably used as a container for the storage and transportation of, for example, foods such as bean curd, jelly, dairy products like yogurt or frozen foods, as well as electric parts or electronic components. In addition, a molded article obtained by bend-molding the polypropylene resin composition of the present invention is excellent in heat resistance and has an excellent shape retention property in bending processing and thus is suitably used for the application of a molded article accompanying bending processing.

**Claims**

1.  A polypropylene resin composition comprising 50 to 99 % by weight of a propylene polymer (A) having a melting point (Tm) in the range of 140 to 170 ˚C as measured by a differential scanning calorimeter and 1 to 50 % by weight of a propylene/α-olefin copolymer (B) having a melting point (Tm) of 100 ˚C or less or having no observed melting point.

2.  The polypropylene resin composition according to claim 1, wherein said propylene polymer (A) has a constituent unit derived from propylene and a constituent unit derived from at least one kind of olefin selected from an ethylene and α-olefin having 4 to 20 carbon atoms and the content of the constituent unit derived from ethylene and α-olefin having 4 to 20 carbon atoms is 3.5 mol% or less.

3.  The polypropylene resin composition according to claim 1 or 2, wherein said propylene polymer (A) is a propylene homopolymer.

4.  The polypropylene resin composition according to any one of claims 1 to 3, wherein said propylene/α-olefin copolymer (B) contains a constituent unit derived from propylene in 65 to 79 mol% and a constituent unit derived from 1-butene in 21 to 35 mol%.

5.  The polypropylene resin composition according to any one of claims 1 to 4, wherein said polypropylene resin composition is a polypropylene resin composition for thermoforming.

6.  A film or sheet having a thickness of 0. 05 to 5 mm formed from said polypropylene resin composition for thermoforming according to claim 5.

7.  A container obtained by thermoforming the film or sheet according to claim 6.

8.  The polypropylene resin composition according to any one of claims 1 to 4, wherein a sheet having 0.6 mm thickness obtained by forming the polypropylene resin composition has a return angle (θ degree) of 30 degree or less when the force is released after bending and holding the sheet at an angle of 90 degree at room temperature for 5 minutes.

9.  A molded article obtained by bending processing a film or sheet obtained from the polypropylene resin composition according to any one of claims 1 to 4.

[Fig. 1]

<table>
<tr><td colspan="2">**INTERNATIONAL SEARCH REPORT**</td><td>International application No.<br><br>PCT/JP2007/055037</td></tr>
</table>

A. CLASSIFICATION OF SUBJECT MATTER
*C08L23/10*(2006.01)i, *B65D1/00*(2006.01)i

According to International Patent Classification (IPC) or to both national classification and IPC

B. FIELDS SEARCHED

Minimum documentation searched (classification system followed by classification symbols)
C08L, B65D1/00, C08F

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
WPI

C. DOCUMENTS CONSIDERED TO BE RELEVANT

| Category* | Citation of document, with indication, where appropriate, of the relevant passages | Relevant to claim No. |
|---|---|---|
| X | JP 6-299015 A  (Mitsubishi Kasei Corp.),<br>25 October, 1994 (25.10.94),<br>Full descriptions<br>(Family: none) | 1,2,3,5-9 |
| X<br>Y | JP 8-217889 A  (Tokuyama Corp.),<br>27 August, 1996 (27.08.96),<br>Full descriptions<br>(Family: none) | 1,2,3,5-9<br>4 |
| X<br><br>Y | WO 98/51732 A1  (Chisso Corp.),<br>19 November, 1998 (19.11.98),<br>Full descriptions | 1,2,3,5,6,7,<br>8<br>4 |

| ☒ | Further documents are listed in the continuation of Box C. | ☒ | See patent family annex. |
|---|---|---|---|

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after  the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>09 May, 2007 (09.05.07) | Date of mailing of the international search report<br>22 May, 2007 (22.05.07) |
| Name and mailing address of the ISA/<br>Japanese Patent Office | Authorized officer |
| Facsimile No. | Telephone No. |

Form PCT/ISA/210 (second sheet) (April 2005)

**EP 1 997 851 A1**

<table>
<tr><td colspan="2" align="center"><b>INTERNATIONAL SEARCH REPORT</b></td><td>International application No.<br><br>PCT/JP2007/055037</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| X | JP 7-33920 A  (Mitsui Petrochemical Industries, Ltd.), | 1,2,3,5,6,7, 8 |
| Y | 03 February, 1995 (03.02.95),<br>Full descriptions | 4 |
| Y | JP 2004-99906 A  (Mitsui Chemicals, Inc.),<br>02 April, 2004 (02.04.04),<br>Full descriptions | 4 |
| P,X | JP 2006-328300 A  (Mitsui Chemicals, Inc.),<br>07 December, 2006 (07.12.06),<br>Full descriptions<br>(Family: none) | 1-9 |
| A | JP 2002-348421 A  (Chisso Corp.),<br>04 December, 2002 (04.12.02),<br>Full descriptions<br>(Family: none) | 1-9 |
| A | JP 2001-131303 A  (Sumitomo Chemical Co., Ltd.),<br>15 May, 2001 (15.05.01),<br>Full descriptions<br>(Family: none) | 1-9 |
| A | JP 2001-131305 A  (Sumitomo Chemical Co., Ltd.),<br>15 May, 2001 (15.05.01),<br>Full descriptions<br>(Family: none) | 1-9 |

Form PCT/ISA/210 (continuation of second sheet) (April 2005)

| INTERNATIONAL SEARCH REPORT<br>Information on patent family members | | International application No.<br>PCT/JP2007/055037 |
|---|---|---|

| | | | |
|---|---|---|---|
| WO 98/51732 A1 | 1998.11.19 | EP 982352 A1 | 2000.03.01 |
| | | CN 1264399 A | 2000.08.23 |
| | | US 6258893 B1 | 2001.07.10 |
| | | KR 2001012600 A | 2001.02.15 |
| | | EP 982352 B1 | 2003.08.27 |
| | | TW 565499 A | 2003.12.11 |
| | | KR 435942 B | 2004.06.12 |
| | | | |
| JP 7-33920 A | 1995.02.03 | JP 3472933 B2 | 2003.12.02 |
| | | | |
| JP 2004-99906 A | 2004.04.02 | EP 629632 A2 | 1994.12.21 |
| | | CA 2125247 A | 1994.12.08 |
| | | JP 7-149833 A | 1995.06.13 |
| | | JP 7-196734 A | 1995.08.01 |
| | | EP 629632 A3 | 1995.03.08 |
| | | JP 7-286005 A | 1995.10.31 |
| | | US 5629254 A | 1997.05.13 |
| | | CN 1103405 A | 1995.06.07 |
| | | US 5658997 A | 1997.08.19 |
| | | CN 1116852 A | 1996.02.14 |
| | | US 5705584 A | 1998.01.06 |
| | | US 5710223 A | 1998.01.20 |
| | | US 5723640 A | 1998.03.03 |
| | | US 5936053 A | 1999.08.10 |
| | | CN 1249312 A | 2000.04.05 |
| | | EP 629632 B1 | 2000.10.04 |
| | | KR 293970 B | 2001.09.17 |
| | | KR 327172 B | 2002.03.13 |
| | | KR 332503 B | 2002.04.13 |
| | | KR 349730 B | 2002.08.24 |
| | | JP 2003-201317 A | 2003.07.18 |
| | | JP 2003-176320 A | 2003.06.24 |
| | | JP 3432020 B2 | 2003.07.28 |
| | | JP 3824664 B2 | 2006.09.20 |
| | | JP 2006-283040 A | 2006.10.19 |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H10212382 B
- JP H1067896 B